# EUROPEAN PATENT SPECIFICATION

(11) **EP 3 707 833 B1**
(45) Date of publication and mention of the grant of the patent: **03.01.2024**
(21) Application number: 17930706.1
(22) Date of filing: 06.11.2017
(51) Int. Cl.: H04B 10/2575, H04B 10/69, H04B 10/079, H04N 21/426, H04N 21/438, H04N 21/61

(54) **AN ARRANGEMENT FOR CATV NETWORK SEGMENTATION**
ANORDNUNG FÜR CATV-NETZWERKSEGMENTIERUNG
AGENCEMENT DE SEGMENTATION DE RÉSEAU CATV

(43) Date of publication of application: 16.09.2020
(73) Proprietor: Teleste Oyj, 20660 Littoinen (FI)
(72) Inventor: FAGERLUND, Perttu, 20540 Turku (FI); MÄKI, Kari, 20320 Turku (FI); KUUSISTO, Sami, 20400 Turku (FI); RITAKALLIO, Ilkka, 20810 Turku (FI); ALAMAUNU, Jyrki, 20720 Turku (FI); RUMPUNEN, Toni, 21280 Raisio (FI)
(74) Representative: Berggren Oy
(86) International application number: PCT/FI2017/050761
(87) International publication number: WO 2019/086748

(56) References cited:
- WO-A1-2017/139776
- US-A1- 2014 010 555
- US-A1- 2014 033 264
- US-A1- 2015 295 648
- US-A1- 2016 043 806
- US-A1- 2017 170 790

## Description

### Field of the invention

The invention relates to cable television (CATV) networks, and especially to network segmentation.

### Background of the invention

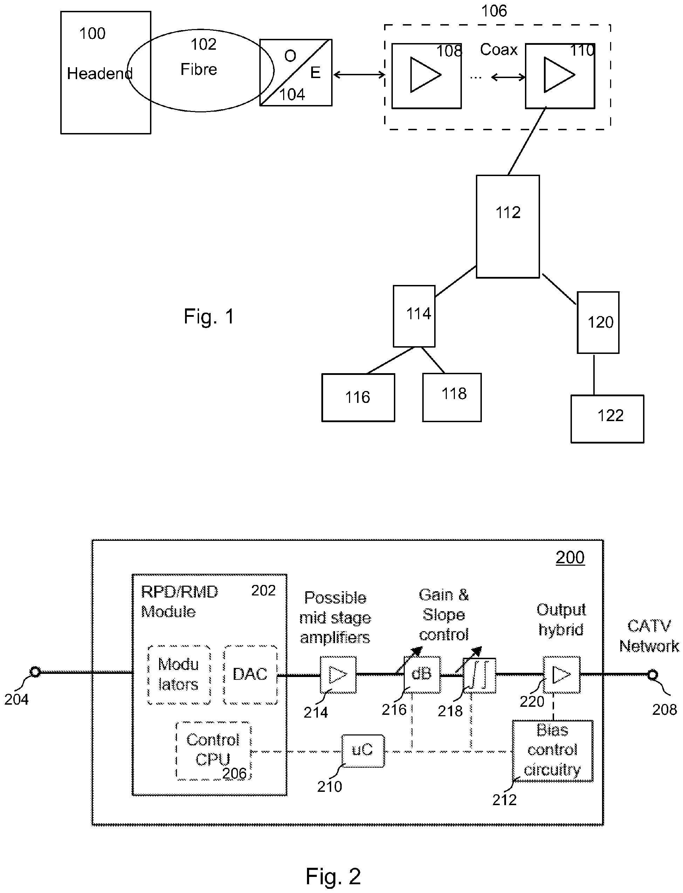

CATV networks may be implemented with various techniques and network topologies, but currently most cable television networks are implemented as so-called HFC networks (Hybrid Fiber Coax), i.e. as combinations of a fiber network and a coaxial cable network. Figure 1 shows the general structure of a typical HFC network. Program services are introduced from the main amplifier 100 (a so-called headend) of the network via an optical fiber network 102 to an optical node 104, which converts the optical signal to an electric signal to be relayed further in a coaxial cable network 106. Depending on the length, branching, topology, etc. of the coaxial cable network, this coaxial cable segment typically comprises one or more broadband amplifiers 108, 110 for amplifying program service signals in a heavily attenuating coaxial media. From the amplifier the program service signals are introduced to a cable network 112 of a smaller area, such as a distribution network of an apartment building, which are typically implemented as coaxial tree or star networks comprising signal splitters for distributing the program service signals to each customer. From a wall outlet the signal is further relayed either via a cable modem 114 to a television receiver 116 or a computer 118, or via a so-called set-top box 120 to a television receiver 122.

Both the optical nodes and amplifiers along the downstream path comprise a plurality of amplifier units/stages for amplifying the downstream signals. The parameters of the components in the amplifier stages within the network elements need to be dimensioned such they can handle the worst case situation of the whole frequency area being loaded with active channels at maximum output level. On the other hand, in typical real life use-cases there are a number of unallocated channels in the network and/or the output signal level is not even close to maximum. This would allow running the amplifiers with smaller bias current and thus lowering the power consumption of the device.

Some network elements are provided with automatic bias current control, where the output power after the last amplifier stage is measured and tuning the bias current is control is based on the measured output power. However, the mere output power enables only a rough-scale adjustment of the bias current. Moreover, the output power provides very little information about the underlying channel configuration.

US 2017/170790 discloses a method for modulating an amplifier power supply to efficiently attain amplified RF output power with much lower power dissipation than existing amplifiers. A processor at a first location of a CATV network receives a signal to be amplified by an amplifier at a second location remote from the processor. A bias point of the amplifier may be variably modulated based on peaks of an input signal to reduce amplifier dissipation.

### Brief summary of the invention

Now, an improved arrangement has been developed to reduce the above-mentioned problems. As aspects of the invention, we present a network element of a cable television network, which is characterized in what will be presented in the independent claims.

The dependent claims disclose advantageous embodiments of the invention.

According to an aspect of the invention, there is provided a network element of a cable television (CATV) network, said network element comprising one or more amplifier units for amplifying downstream signal transmission for output into one or more output channels; means for obtaining information about active output channels; and means for adjusting bias current of said one or more amplifier units on the basis of the information about the active output channels.

According to an embodiment, said information about the active output channels comprises channel allocation and desired power level of the output channels.

According to an embodiment, the network element is configured calculate an adjustment for the bias current on the basis of the channel allocation and desired power level of the output channels.

According to an embodiment, the network element comprises a plurality of predetermined levels for the bias current, and the network element is configured to select a level of the bias current on the basis of the channel allocation and desired power level of the output channels.

According to an embodiment, the network element further comprises a distributed access node unit, wherein said distributed access node unit is configured to provide the information about the active output channels.

According to an embodiment, said amplifier units comprise one or more of the following: a mid-stage amplifier unit, a gain control amplifier unit, a slope control amplifier unit, an output hybrid amplifier unit.

According to an embodiment, the information about the active output channels is configured to be obtained periodically; and the bias current of said one or more amplifier units is configured to be adjusted on the basis of changes in the information about the active output channels.

According to an embodiment, said means for obtaining information about the active output channels are configured to monitor changes in settings of the output channels; and the bias current of said one or more amplifier units is configured to be adjusted on the basis of detected changes in the information about the active output channels.

According to an embodiment, the network element further comprises a receiver for receiving the information about the active output channels or about the control signals for adjusting the bias current from an external source.

According to an embodiment, the distributed access node unit and the functionalities of the network element are implemented as a common entity.

These and other aspects, embodiments and advantages will be presented later in the detailed description of the invention.

### Brief description of the drawings

The invention will now be described in more detail in connection with preferred embodiments with reference to the appended drawings, in which:
- Fig. 1: shows the general structure of a typical HFC network; and
- Fig. 2: shows a simplified block chart of a network element according to an embodiment of the invention.

### Detailed description of the embodiments

Data Over Cable Service Interface Specification (DOCSIS) is a CATV standard providing specifications for high-bandwidth data transfer in an existing CATV system. DOCSIS may be employed to provide Internet access over existing hybrid fiber-coaxial (HFC) infrastructure of cable television operators. DOCSIS has been evolved through versions 1.0, 1.1, 2.0 and 3.0 to the latest version of 3.1. DOCSIS provides a lucrative option for cable network providers to maximize both the downstream and upstream data throughput using the existing cable TV network, but without making expensive changes to the HFC network infrastructure.

When implementing the HFC network of Figure 1 according to DOCSIS, the headend 100 of the CATV network comprises inputs for signals, such as TV signals and IP signals, a television signal modulator and a cable modem termination system (CMTS). The CMTS provides high-speed data services to customers thorough cable modems (CM; 114) locating in homes. The CMTS forms the interface to the IP-based network over the Internet. It modulates the data from the Internet for downstream transmission to homes and receives the upstream data from homes. The CMTS additionally manages the load balancing, error correction parameters and the class of service (CoS).

Signals from the headend 100 are distributed optically (fiber network 102) to the vicinity of individual homes, where the optical signals are converted to electrical signals at the terminating points 104. The electrical signals are then distributed to the various homes via the existing 75 ohm coaxial cables 106. The maximum data transfer of the coaxial cables is limited due to strong frequency-based attenuation. Therefore, the electrical signals transmitted over coaxial cables must be amplified. The amplifiers 108, 110 used for this purpose are suited to a specific frequency range. In addition, the upstream and downstream must occur over the same physical connection. The last part 112 of the coaxial connection between the CMTS and the CMs branches off in a star or a tree structure. A CMTS transmits the same data to all CMs located along the same section of cable (one-to-many communications). A request/grant mechanism exists between the CMTS and the CMs, meaning that a CM needing to transmit data must first send a request to the CMTS, after which it can transmit at the time assigned to it.

Depending on the version of DOCSIS used in the CATV network, there is a great variety in options available for configuring the network. For the downstream channel width, all versions of DOCSIS earlier than 3.1 use either 6 MHz channels (e.g. North America) or 8 MHz channels (so-called "EuroDOCSIS"). However, the upstream channel width may vary between 200 kHz and 3.2 MHz (versions 1.0/1.1), and even to 6.4 MHz (version 2.0). 64-QAM or 256-QAM modulation is used for downstream data in all versions, but upstream data uses QPSK or 16-level QAM (16-QAM) for DOCSIS 1.x, while QPSK, 8-QAM, 16-QAM, 32-QAM, 64-QAM and 128-QAM are used for DOCSIS 2.0 & 3.0.

DOCSIS 3.1 specifications support capacities of at least 10 Gbit/s downstream and 1 Gbit/s upstream using 4096 QAM. DOCSIS 3.1 rejects the 6 or 8 MHz wide channel spacing and uses narrower orthogonal frequency-division multiplexing (OFDM) subcarriers being 20 kHz to 50 kHz wide, which sub-carriers can be combined within a block spectrum of about 200 MHz wide.

DOCSIS 3.1 further provides the concept of Distributed CCAP Architecture (DCA). Converged Cable Access Platform (CCAP) may be defined as an access-side networking element or set of elements that combines the functionality of a CMTS with that of an Edge QAM (i.e. the modulation), providing high-density services to cable subscribers. Conventionally, the CCAP functionalities have been implemented in the headend/hub, such as the headend 100 in Figure 1. In a DCA, some features of the CCAP are distributed from headend/hub to the network elements closer to the customers, for example to the optical nodes 104 in Figure 1. DOCSIS 3.1 specifies at least two network element concepts, i.e. a Remote PHY Device (RPD) and a Remote-MACPHY Device (RMD), to which some functionalities of the headend can be distributed. A recent version of DOCSIS 3.1 specification also provided Annex F introducing a Full Duplex DOCSIS 3.1 technology, where a new distributed access node called Full Duplex (FDX) Node is determined.

The data transmission between the distributed parts of the CCAP is typically carried out through a fiber connection. This may provide both scale advantages and flexible deployment options by maximizing the channel capacity and simplifying many operations via the usage of digital fiber and Ethernet transport.

The amplifiers and optical nodes in a HFC network (e.g. 104, 108, 110 in Fig. 1) are specified for some frequency range, today typically up to 1.2GHz. The parameters of the components in the amplifier stages within the devices need to be dimensioned such they can handle the worst case situation of the whole frequency area being loaded with active channels at maximum output level. On the other hand, in typical real life use-cases there are a number of unallocated channels in the network and/or the output signal level is not even close to maximum.

This would allow running the amplifiers with smaller bias current and thus lowering the power consumption of the device.

In some existing optical node and amplifier products, there is a setting to lower the bias current for the output hybrid (i.e. the last amplifier stage before the output). This setting needs to be manually set in the user interface of the device. There are also devices with automatic bias current control, where the output power after the last amplifier stage is measured and tuning the bias current is control is based on the measured output power. However, the mere output power provides only one parameter for adjusting the bias current. For example, the output power provides very little information about the underlying channel configuration.

Consequently, an improved arrangement is presented herein for adjusting the bias current of amplifier units in network elements.

According to an aspect, a network element of a cable television (CATV) network is now introduced, said network element comprising one or more amplifier units for amplifying downstream signal transmission for output into one or more output channels; means for obtaining information about active output channels; and means for adjusting bias current of said one or more amplifier units on the basis of the information about the active output channels.

Hence, through the introduction of the DCA concept, the amplifiers and optical nodes in a HFC network can now be easily provided with information about the active output channels in downstream direction. According to DOCSIS 3.1, the remote DCA units, i.e. RPD/RMD or FDX, are provided with full knowledge on the amount, frequency, power level and other characteristics of the output signals they generate. Bias current of the amplifier units within the optical nodes or amplifiers can now be automatically adjusted based on the information about the active output channels. The information may be provided either by a RPD/RMD or a FDX module inside the network element or by an external management system. This will lower the power consumption of the optical nodes and amplifiers in partially loaded networks.

Previously, the full knowledge on the amount, frequency, power level and other characteristics of the output signals was only available in the CMTS within the headend, and the network elements did not have this information, for example, for controlling bias current of amplifier units automatically based on the channel loading information.

According to an embodiment, said information about the active output channels comprises channel allocation and desired power level of the output channels. The channel allocation provides information about the number of active downstream channels and their frequency bands. For each frequency band, there is configured a desired power level. HFC nodes are typically configured to send output signal as tilted; the highest frequency signals are sent with much higher power level than the lower frequency signals. Therefore the few highest frequency signals consume a significant share of the total output power. In case the information about the active output channels reveals that the highest frequency channels are not in use, the amplifier units can advantageously be run with lower bias current in which case they use less power.

According to an embodiment, the network element is configured to calculate an adjustment for the bias current on the basis of the channel allocation and desired power level of the output channels. Thus, the network element may comprise means, for example a processing unit, for calculating one or more adjusting parameters on the basis of the channel allocation and desired power level of the output channels. The network element may then be configured to adjust the bias current using said one or more adjusting parameters.

According to an embodiment, the network element comprises a plurality of predetermined levels for the bias current, and the network element is configured to select a level of the bias current on the basis of the channel allocation and desired power level of the output channels. For example, there may be four predetermined levels for the bias current, whereupon the selected level of the bias current may be indicated by two bits. Similarly, eight predetermined levels may be indicated by three bits.

According to an embodiment, the network element further comprises a distributed access node unit, wherein said distributed access node unit is configured to provide the information about the active output channels. Thus, in this embodiment, the network element, such as the optical node or amplifier, comprises a DCA node unit, such as an RPD/RMD module.

Figure 2 shows an example of a simplified block chart of network element according to an embodiment, the network element in this example being an optical node. Figure 2 shows a simplification of the downstream path within the node; thus, no components relating to upstream path are shown.

The optical node 200 comprises a RPD/RMD module 202 arranged to receive digital downstream multiplexes from the headend via the optical interface 204 to the fiber network. The RPD/RMD module 202 generates the RF output signals by converting the digital signals to analog signals and modulating them accordingly. The RPD/RMD module 202 comprises a processing unit (CPU) 206 for controlling the operation of the RPD/RMD module 202 and at least some of components of the optical node. The processing unit 206 obtains information about the amount and frequency placement of the signals and the desired signal output level on the node output interface. For the implementation within the network element, it is irrelevant how said information is provided to the RPD/RMD module. The RPD/RMD module may, for example, receive the information from the headend, or the RPD/RMD module may deduce the information from the received signals. The information may also be provided as inband information within the downstream multiplexes.

This information may be supplied to a microcircuit (uC) 210 for calculating the control information for adjusting the bias currents of various amplifier units, and the control information is supplied to a bias control circuitry 212. Alternatively, the processing unit 206 may calculate the control information and supply it directly to the bias control circuitry 212.

The network element typically comprises a plurality of amplifier units along the downstream path. There may be one or more mid-stage amplifier units 214, a gain control amplifier unit 216, a slope control amplifier unit and the output hybrid amplifier unit 220. Now, on the basis of the control information for adjusting the bias currents, the bias control circuitry 212 adjusts the bias current of one or more of these amplifier units such that the output signal performance of active output channels is maintained in desired level but the power consumption is minimised.

According to an embodiment, the information about the active output channels is configured to be obtained periodically; and the bias current of said one or more amplifier units is configured to be adjusted on the basis of changes in the information about the active output channels. Since the channel allocation of a CATV network segments does not typically change very frequently, it may be sufficient that the information about the active output channels is updated periodically, for example every 6, 12 or 24 hours. Since no continuous monitoring of the information about the active output channels is required, the power consumption is further minimised.

According to an embodiment, said means for obtaining information about the active output channels are configured to monitor changes in settings of the output channels; and the bias current of said one or more amplifier units is configured to be adjusted on the basis of detected changes in the information about the active output channels. Thus, if it is desirable that bias current is adjusted immediately upon changes in the configuration of the active output channels, continuous monitoring may be applied and adjust the bias currents of the amplifier units on the basis of detected changes.

According to an embodiment, the network element further comprises a receiver for receiving the information about the active output channels or about the control signals for adjusting the bias current from an external source. Thus, the network element may not necessarily need to comprise a DCA node unit, such as RPD/RMD module. The network element may be, for example, an amplifier along the coaxial cable segment of the HFC network, such as the amplifiers 108, 110 in Figure 1. Let us suppose that network element of Figure 2 corresponds to the optical node 104 of Figure 1. Then the amplifier 108, 110 may receive the necessary information for adjusting the bias currents from the DCA node unit of the optical node 104, or from another external source, such as directly from the CMTS in the headend.

Consequently, the embodiments disclosed herein are usable also in traditional non-RPD/RMD nodes and amplifiers through providing the required channel allocation information from an external source. Herein, the network element may be remotely controlled by a unidirectional control signalling from the headend. Herein, a proprietary (vendor-specific) signaling solution may be used. For example, many network element vendors provide their own proprietary FSK (Frequency Shift Keying) signaling solution for controlling the network elements from the headend.

According to an embodiment, the network element further comprises a modem, wherein the network element is configured to be remotely controlled by a bi-directional control signalling from/to the external source. For managing the network elements by using two-way communication from/to the external source, the control signaling is typically carried out by using modems in accordance with DOCSIS or HMS (Hybrid Management Sublayer) standard or proprietary modems. For example, the RPD/RMD node may inform the amplifiers connected to it via HMS or other communication channel. Alternatively, a Network Management System (NMS) functionality or the CMTS may inform the whole node/amplifier chain from headend.

According to an embodiment, the distributed access node unit, such as the RPD/RMD node or FDX node, and the functionalities of the network element are implemented as a common entity. Until now, the RPD/RMD nodes are typically provided as separate entities, which are plugged-in to the network element via a plug interface. As a result, the communication between the RPD/RMD node and the functionalities of the network element, such as the amplifier units, may be very limited or even lack totally. By implementing the RPD/RMD node and the functionalities of the network element are implemented as a common entity, for example on a common circuit board, the communication between the RPD/RMD node and the functionalities of the network element is facilitated and the information provided by the RPD/RMD unit may be better utilized.

In addition to the direct power saving benefits in individual network elements, another aspect relates to enabling a dynamic power saving mechanism in the whole partially loaded network segment. The CMTS at the headend monitors the usage of the downstream channels, and upon noticing that the full capacity is not needed outside peak-usage hours, the CMTS shuts down some of the output channels. As a result of disabling a channel, preferably the highest frequency one, outside the peak-hours, all the actively controlled nodes and amplifiers in the network segment will lower bias current. This results as significant reduction of power usage outside peak-hours.

In general, the various embodiments may be implemented in hardware or special purpose circuits or any combination thereof. While various embodiments may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

A skilled person appreciates that any of the embodiments described above may be implemented as a combination with one or more of the other embodiments, unless there is explicitly or implicitly stated that certain embodiments are only alternatives to each other.

The various embodiments can be implemented with the help of computer program code that resides in a memory and causes the relevant apparatuses to carry out the invention. Thus, the implementation may include a computer readable storage medium stored with code thereon for use by an apparatus, such as the network element, which when executed by a processor, causes the apparatus to perform the various embodiments or a subset of them. Additionally or alternatively, the implementation may include a computer program embodied on a non-transitory computer readable medium, the computer program comprising instructions causing, when executed on at least one processor, at least one apparatus to apparatus to perform the various embodiments or a subset of them. For example, an apparatus may comprise circuitry and electronics for handling, receiving and transmitting data, computer program code in a memory, and a processor that, when running the computer program code, causes the apparatus to carry out the features of an embodiment.

It will be obvious for a person skilled in the art that with technological developments, the basic idea of the invention can be implemented in a variety of ways. Thus, the invention and its embodiments are not limited to the above-described examples but they may vary within the scope of the claims.

## Claims

1. A network element of a cable television network, said network element comprising
one or more amplifier units configured to amplify downstream signal transmission for output into one or more output channels;
means configured to obtain information about the number of active output channels and their frequency bands; and
means configured to reduce, in response to said information revealing that channels with the highest frequency bands are not in use, bias current of said one or more amplifier units on the basis of at least channel allocation and desired power level of the active output channels.

2. The network element according to claim 1, wherein the network element is configured to calculate an adjustment for the bias current on the basis of the channel allocation and desired power level of the output channels.

3. The network element according to claim 1, wherein the network element comprises a plurality of predetermined levels for the bias current, and the network element is configured to select a level of the bias current on the basis of the channel allocation and desired power level of the output channels.

4. The network element according to any preceding claim, further comprising a distributed access node unit, wherein said distributed access node unit is configured to provide the information about the active output channels.

5. The network element according to any preceding claim, wherein said amplifier units comprise one or more of the following: a mid-stage amplifier unit, a gain control amplifier unit, a slope control amplifier unit, an output hybrid amplifier unit.

6. The network element according to any preceding claim, wherein the information about the active output channels is configured to be obtained periodically; and
the bias current of said one or more amplifier units is configured to be adjusted on the basis of changes in the information about the active output channels.

7. The network element according to any of claims 1 - 5, wherein said means for obtaining information about the active output channels are configured to monitor changes in settings of the output channels; and
the bias current of said one or more amplifier units is configured to be adjusted on the basis of the detected changes in the information about the active output channels.

8. The network element according to any preceding claim, further comprising a receiver for receiving the information about the active output channels or about the control signals for adjusting the bias current from an external source.

9. The network element according to claim 4, wherein the distributed access node unit and the functionalities of the network element are implemented as a common entity.

## Patentansprüche

1. Netzwerkelement eines Kabelfernsehnetzes, wobei das Netzwerkelement Folgendes umfasst eine oder mehrere Verstärkereinheiten, die so konfiguriert sind, dass sie die nachgeschaltete Signalübertragung zur Ausgabe an einen oder mehrere Ausgangskanäle verstärken;
Mittel, die so konfiguriert sind, dass sie Informationen über die Anzahl der aktiven Ausgangskanäle und deren Frequenzbänder erhalten; und
Mittel, die so konfiguriert sind, dass sie als Reaktion auf die Informationen, die zeigen, dass die Kanäle mit den höchsten Frequenzbändern nicht in Gebrauch sind, den Vorspannungsstrom der einen oder mehreren Verstärkereinheiten auf der Grundlage von mindestens der Kanalzuweisung und dem gewünschten Leistungspegel der aktiven Ausgangskanäle reduzieren.

2. Netzelement nach Anspruch 1, wobei das Netzelement so konfiguriert ist, dass es eine Anpassung für den Vorspannungsstrom
auf der Grundlage der Kanalzuweisung und des gewünschten Leistungspegels der Ausgangskanäle berechnet.

3. Netzelement nach Anspruch 1, wobei das Netzelement mehrere vorbestimmte Pegel für den Vorspannungsstrom umfasst und das Netzelement so konfiguriert ist, dass es einen Pegel des Vorspannungsstroms auf der Grundlage der Kanalzuweisung und des gewünschten Leistungspegels der Ausgangskanäle auswählt.

4. Das Netzelement nach einem der vorhergehenden Ansprüche, das ferner eine verteilte Zugangsknoteneinheit umfasst, wobei die verteilte Zugangsknoteneinheit so konfiguriert ist, dass sie die Informationen über die aktiven Ausgangskanäle bereitstellt.

5. Netzelement nach einem der vorhergehenden Ansprüche, wobei die Verstärkereinheiten eine oder mehrere der folgenden Einheiten umfassen: eine Mittelstufen-Verstärkereinheit, eine Steuerungs-Verstärkereinheit, eine Steigungssteuerungs-Verstärkereinheit, eine Ausgangshybrid-Verstärkereinheit.

6. Netzelement nach einem der vorhergehenden Ansprüche, wobei die Information über die aktiven Ausgangskanäle so konfiguriert ist, dass sie periodisch erhalten wird; und
wobei der Vorspannungsstrom der einen oder mehreren Verstärkereinheiten so konfiguriert ist, dass er auf der Grundlage von Änderungen der Informationen über die aktiven Ausgangskanäle eingestellt wird.

7. Netzelement nach einem der Ansprüche 1 bis 5, wobei die genannten Mittel zum Erhalten von Informationen über die aktiven Ausgangskanäle so konfiguriert sind, dass sie Änderungen der Einstellungen der Ausgangskanäle überwachen; und
wobei der Vorspannungsstrom der einen oder mehreren Verstärkereinheiten so konfiguriert ist, dass er auf der Grundlage der gewählten Änderungen der Informationen über die aktiven Ausgangskanäle eingestellt wird.

8. Netzelement nach einem der vorhergehenden Ansprüche, ferner mit einem Empfänger zum Empfangen der Informationen über die aktiven Ausgangskanäle oder über die Steuersignale zum Einstellen des Vorspannungsstroms von einer externen Quelle.

9. Netzelement nach Anspruch 4, wobei die verteilte Zugangsknoteneinheit und die Funktionalitäten des Netzelements als eine gemeinsame Einheit implementiert sind.

## Revendications

1. Élément de réseau d'un réseau de télévision par câble, ledit élément de réseau comprenant une ou plusieurs unités d'amplification configurées pour amplifier une transmission de signal en aval pour une sortie dans un ou plusieurs canaux de sortie ;
des moyens configurés pour obtenir des informations sur le nombre de canaux de sortie actifs et leurs bandes de fréquences ; et
des moyens configurés pour réduire, en réponse auxdites informations révélant que les canaux ayant les bandes de fréquences les plus élevées ne sont pas utilisés, le courant de polarisation desdites une ou plusieurs unités d'amplification sur la base au moins d'attribution de canal et de niveau de puissance souhaité des canaux de sortie actifs.

2. Élément de réseau selon la revendication 1, dans lequel l'élément de réseau est configuré pour calculer un ajustement pour le courant de polarisation en fonction de l'attribution des canaux et du niveau de puissance souhaité des canaux de sortie.

3. Élément de réseau selon la revendication 1, dans lequel l'élément de réseau comprend une pluralité de niveaux prédéterminés pour le courant de polarisation, et l'élément de réseau est configuré pour sélectionner un niveau du courant de polarisation sur la base de l'attribution de canal et du niveau de puissance souhaité des canaux de sortie.

4. Élément de réseau selon une quelconque revendication précédente, comprenant en outre une unité de noeud d'accès distribué, dans lequel ladite unité de noeud d'accès distribué est configurée pour fournir les informations concernant les canaux de sortie actifs.

5. Élément de réseau selon une quelconque revendication précédente, dans lequel lesdites unités d'amplification comprennent un ou plusieurs des éléments suivants : une unité d'amplification d'étage intermédiaire, une unité d'amplification de commande de gain, une unité d'amplification de contrôle de pente, une unité d'amplification de sortie hybride.

6. Élément de réseau selon une quelconque des revendications précédentes, dans lequel les informations concernant les canaux de sortie actifs sont configurées pour être obtenues périodiquement ; et
le courant de polarisation de ladite ou desdites unités d'amplification est configuré pour être ajusté sur la base de changements dans les informations concernant les canaux de sortie actifs.

7. Élément de réseau selon l'une quelconque des revendications 1 à 5, dans lequel lesdits moyens pour obtenir des informations sur les canaux de sortie actifs sont configurés pour surveiller des changements dans les paramètres des canaux de sortie ; et
le courant de polarisation de ladite ou desdites unités d'amplification est configuré pour être ajusté sur la base des changements détectés dans les informations concernant les canaux de sortie actifs.

8. Élément de réseau selon une quelconque revendication précédente, comprenant en outre un récepteur pour recevoir les informations sur les canaux de sortie actifs ou sur les signaux de commande pour ajuster le courant de polarisation provenant d'une source externe.

9. Élément de réseau selon la revendication 4, dans lequel l'unité de noeud d'accès distribué et les fonctionnalités de l'élément de réseau sont implémentées en tant qu'entité commune.
